(19) Europäisches Patentamt
European Patent Office
Office européen des brevets

(11) **EP 2 669 104 B1**

(12) **EUROPÄISCHE PATENTSCHRIFT**

(45) Veröffentlichungstag und Bekanntmachung des Hinweises auf die Patenterteilung:
**01.01.2020   Patentblatt 2020/01**

(51) Int Cl.:
***B60H 1/00*** *(2006.01)*

(21) Anmeldenummer: **13164125.0**

(22) Anmeldetag: **17.04.2013**

(54) **AUTOMATISIERTE FÜHRERKABINEN-KLIMAREGELUNG**

AUTOMATED DRIVER CABIN CLIMATE CONTROL

RÉGULATION AUTOMATISÉE DE LA CLIMATISATION D'UNE CABINE CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2012   DE 102012208970**

(43) Veröffentlichungstag der Anmeldung:
**04.12.2013   Patentblatt 2013/49**

(73) Patentinhaber: **Manitowoc Crane Group France SAS**
**69574 Dardilly Cedex (FR)**

(72) Erfinder:
• **Remmers, Olaf**
  **26389 Wilhelmshaven (DE)**
• **Stander, Martin R.**
  **Greencastle, PA Pennsylvania 17225 (US)**
• **Benton, John F.**
  **Smithsburg, MD Maryland 21783 (US)**
• **Janßen, Eilt-Ihnke**
  **26419 Schortens (DE)**

(74) Vertreter: **SSM Sandmair**
**Patentanwälte Rechtsanwalt**
**Partnerschaft mbB**
**Joseph-Wild-Straße 20**
**81829 München (DE)**

(56) Entgegenhaltungen:
**EP-A1- 0 444 527          EP-A1- 1 116 611**
**DE-A1- 3 424 366          DE-A1-102008 026 354**
**DE-A1-102008 059 553     JP-A- S60 135 318**
**US-B1- 6 672 085**

EP 2 669 104 B1

**Beschreibung**

Die Erfindung betrifft ein Verfahren zur automatisierten Klimaregelung in einer Führerkabine einer Baumaschine, insbesondere eines Krans und eine entsprechende Klimaregelungsvorrichtung. Gewöhnlicherweise haben Baumaschinen eine Führerkabine, um den Baumaschinenführer einen Arbeitsplatz zur Verfügung zu stellen, der insbesondere vor Witterung schützt. Bei solchen geschlossenen Kabinen muss eine Belüftung vorgesehen werden, wobei die der Kabine zugeführte Luft mittels einer Heizung erwärmt und gegebenenfalls mittels einer Klimaanlage gekühlt werden kann.

Aufgrund der notwendigen großflächigen Kabinenfenster und der Tatsache, dass sich der Arbeitsplatz relativ nahe an den Kabinenwänden befindet, kann trotz einer Heizung und einer Klimaanlage nicht sichergestellt werden, dass innerhalb der Kabine eine für das Personal angenehme Raumtemperatur erreicht wird. So muss insbesondere während eines länger andauernden Maschinenbetriebs, beispielsweise über den Tag hinweg, die Temperatureinstellung der Heizung bzw. Klimaanlage mehrmals nachkorrigiert werden. Ferner sind sogenannte "Klimaautomatiken" bekannt, welche die Temperatur der der Kabine zugeführten Luft auf einen voreingestellten Wert einregeln, auf diese Weise jedoch ebenfalls nicht sicherstellen können, dass die Kabinenlufttemperatur vom Kabinenpersonal als angenehm empfunden wird.

Eine Anordnung zur Regelung der Temperatur im Fahrerhaus eines Nutzfahrzeuges wird durch die DE 3424366 A1 offenbart.

Es ist die Aufgabe der vorliegenden Erfindung, ein Verfahren und eine Vorrichtung bereitzustellen, welches/welche eine vom Kabinenpersonal als angenehm empfundene Kabinentemperatur während des Maschinenbetriebs sicherstellt.

Diese Aufgabe wird durch den Gegenstand der unabhängigen Patentansprüche 1 und 7 gelöst. Die abhängigen Ansprüche bilden hierbei den erfindungsgemäßen Gegenstand vorteilhaft weiter.

Gemäß der vorliegenden Erfindung wird die Ist-Temperatur der Luft in der Kabine mittels zumindest eines Sensors erfasst und Eigenschaften, insbesondere der Volumenstrom, die Richtung und/oder die Temperatur der der Kabine zugeführten Luft auf Basis der erfassten Ist-Temperatur und einer bestimmten Soll-Temperatur automatisch geregelt, wobei die Soll-Temperatur auf Basis von zumindest einer Größe automatisch bestimmt wird, die Einfluss auf die thermische Behaglichkeit des Kabinenpersonals hat.

Die sogenannte thermische Behaglichkeit in einem gegebenen Raumklima wird erreicht, wenn der Wärmehaushalt des Körpers bei einer Körper-Kerntemperatur von etwa 37°C im Gleichgewicht ist. Die thermische Behaglichkeit ist demnach keine Größe, die sich rechnerisch exakt ermitteln lässt, sondern ist vom subjektiven Empfinden jeder einzelnen Person abhängig. Daher ist es nicht die Regel, dass alle in einem Raum befindlichen Personen das Raumklima als behaglich empfinden. Nach DIN EN ISO 7730 wird ein sogenanntes "akzeptables Raumklima" als eine Umgebung definiert, die von mindestens 80% der Personen, die sich dort aufhalten, als thermisch annehmbar empfunden wird.

Die nahezu vollständige Sicherstellung der thermischen Behaglichkeit (Akzeptanz von mehr als 80% der Personen) in einer Führerkabine erfordert die Miteinbeziehung der folgenden Grundgrößen:

- Lufttemperatur;
- thermische Strahlung;
- Strömungsgeschwindigkeit der Luft;
- Luftfeuchtigkeit;

wobei zusätzlich folgende Größen Einfluss auf die thermische Behaglichkeit haben:

- Wärmedämmung der Kleidung;
- stoffwechselbedingte Wärmeerzeugung.

Mit anderen Worten wird gemäß der vorliegenden Erfindung die Temperatur der der Kabine zugeführten Luft nicht nur auf Basis einer erfassten Ist-Temperatur und einer fest eingestellten Soll-Temperatur geregelt, sondern die Temperatur der der Kabine zugeführten Luft basiert auch mittelbar, nämlich über die Berechnung einer Soll-Temperatur auf Basis weiterer Größen auf diesen Größen. Da sich diese Größen über die Dauer des Maschinenbetriebs ändern können, ändert sich somit auch die daraus bestimmte Soll-Temperatur, was wiederum Einfluss auf die Temperatur der der Kabine zugeführten Luft hat.

Neben der Temperatur der zugeführten Luft können erfindungsgemäß auch weitere Eigenschaften der zugeführten Luft variiert werden, und zwar ebenfalls basierend auf den Größen, welche Einfluss auf die thermische Behaglichkeit des Kabinenpersonals haben.

Beispielsweise kann die Ausrichtung von Lüftungsdüsen variiert werden, so dass eine gegebenenfalls als unangenehm empfundene Anströmung unbedeckter Haut des Kabinenpersonals durch den der Kabine zugeführten Luftstrom vermieden wird. Ebenfalls denkbar wäre eine Entfeuchtung der zugeführten Luft, um das Gefühl von Schwüle zu vermeiden.

Gemäß einer bevorzugten Ausführungsform der vorliegenden Erfindung wird zumindest eine der folgenden Größen bei der Bestimmung der Soll-Temperatur berücksichtigt:

- die Lufttemperatur außerhalb der Kabine;
- die auf das Kabinenpersonal einwirkende thermische Strahlung;
- die Strömungsgeschwindigkeit der Kabinenluft;
- die Luftfeuchtigkeit der Kabinenluft;
- die stoffwechselbedingte Wärmeerzeugung es Kabinenpersonals; und/oder
- die Wärmedämmung der Kleidung des Kabinenpersonals.

Mit anderen Worten kann gemäß der vorliegenden Erfindung die Soll-Temperatur der Kabinenluft auf Basis einzelner oder aller dieser Größen bestimmt werden.

Die Lufttemperatur außerhalb der Kabine hat insofern Einfluss auf die thermische Behaglichkeit des Kabienenpersonal, dass bei höherer/niedrigerer Außentemperatur (Sommer bzw. Winter) eine vorgegebene Kabinenlufttemperatur nicht so hoch bzw. niedrig empfunden wird als bei niedrigerer bzw. höherer Außentemperatur (Winter bzw. Sommer).

Da Führerkabinen naturgemäß eine gute Sicht nach außen bieten müssen, haben diese stets große Fensterflächen, was wiederum die thermische Strahlenbelastung des Kabinenpersonals durch die Sonne erhöht. Ebenso beaufschlagen beispielsweise durch die Sonne erwärmte Bauteile das Kabinenpersonal mit thermischer Strahlung. Die vorliegende Erfindung ermöglicht es, bei höherer thermischer Strahlenbelastung die Kabinenlufttemperatur automatisch herabzusetzen, um die vom Kabinenpersonal "gefühlte Temperatur" und somit die thermische Behaglichkeit beizubehalten.

Da Luft ein thermischer Isolator ist, hat die Strömungsgeschwindigkeit der Kabinenluft ebenfalls Einfluss auf die "gefühlte Temperatur", da die vom Körper des Kabinenpersonals erwärmte Grenzschicht durch vorbeiströmende Luft abgetragen und die gefühlte Temperatur je nach Temperatur der vorbeiströmenden Luft erhöht oder verringert wird.

Auch ist es erfindungsgemäß möglich, die Soll-Temperatur in Abhängigkeit der Luftfeuchtigkeit der Kabinenluft bzw. der der Kabine zugeführten Luft zu regeln. Beispielsweise kann bei einer hohen Luftfeuchtigkeit die Temperatur herabgesetzt werden, um das Gefühl von Schwüle zu vermeiden.

Um der thermischen Behaglichkeit verschiedener Personen gerecht zu werden, kann die Soll-Temperatur auch auf Basis der stoffwechselbedingten Wärmeerzeugung des jeweiligen Kabinenpersonals bestimmt werden, da die thermische Behaglichkeit von Größe und Gewicht des Kabinenpersonals abhängt, ebenso wie von dessen Tätigkeit.

Auch kann die Soll-Temperatur von der Wärmedämmung der Kleidung des Kabinenpersonals abhängig gemacht werden, um beispielsweise sowohl im Sommer als auch im Winter bei entsprechender Kleidung die thermische Behaglichkeit des Kabinenpersonals sicherzustellen.

Das im Folgenden vorgestellte Klimakomfortmodell liefert einen repräsentativen Vorhersagewert des Wärme-bzw. Kälteempfindens als Grad des Unbehagens von Menschen in einem Wohn-, Arbeits- oder Versammlungsraum. Als Maßeinheit dient bei diesem Modell das PMV (vorausgesagtes mittleres Votum über den Klimakomfort). Der PMV-Index beschreibt die zu erwartende Klimabeurteilung einer Personengruppe anhand einer sieben-stufigen Beurteilungsskala, in welcher der zustand thermischer Behaglichkeit durch das neutrale Votum "0" ausgedrückt wird.

| Bewertung des Raumklimas als | | | | | | |
|---|---|---|---|---|---|---|
| zu warm | warm | etwas warm | neutral | etwas kühl | kühl | kalt |
| 3 | 2 | 1 | 0 | -1 | -2 | -3 |

Der PMV-Index kann erfindungsgemäß anhand der Gleichungen (1) bis (4) berechnet werden:

$$PMV = \left[0{,}303 \cdot \exp(-0{,}036 \cdot M) + 0{,}028\right]$$

$$\left\{ \begin{array}{l} (M-W) - 3{,}05 \times 10^{-3}\left[5733 - 6{,}99(M-W) - p_a\right] - 0{,}42\left[(M-W) - 58{,}15\right] \\ -1{,}7 \times 10^{-5} M(5867 - p_a) - 0{,}0014\, M(34 - t_a) \\ -3{,}96 \times 10^{-8} f_{cl}\left[(t_{cl} + 273)^4 - (t_r + 273)^4\right] - f_{cl}h_c(t_{cl} - t_a) \end{array} \right\} \qquad (1)$$

$$t_{cl} = 35,7 - 0,028(M - W) - I_{cl}\left\{3,96 \times 10^{-8} f_{cl}\left[(t_{cl} + 273)^4 - (t_r + 273)^4\right] + f_{cl}\, h_c(t_{cl} - t_a)\right\} \tag{2}$$

$$h_c = \begin{cases} 2,38 \cdot |t_{cl} - t_a|^{0,25} & \text{für} & 2,38 \cdot |t_{cl} - t_a|^{0,25} > 12,1 \cdot \sqrt{v_{ar}} \\ 12,1 \cdot \sqrt{v_{ar}} & \text{für} & 2,38 \cdot |t_{cl} - t_a|^{0,25} < 12,1 \cdot \sqrt{v_{ar}} \end{cases} \tag{3}$$

$$f_{cl} = \begin{cases} 1,00 + 1,290 I_{cl} & \text{für} & I_{cl} \leq 0,078 m^2 \cdot K/W \\ 1,05 + 0,645 I_{cl} & \text{für} & I_{cl} > 0,078 m^2 \cdot K/W \end{cases} \tag{4}$$

Darin ist:

M... der Energieumsatz der Person [W/m$^2$]
W... die abgegebene wirksame mechanische Leistung [W/m$^2$] In der Regel kann jedoch W=0 angesetzt werden.
$I_{cl}$... die Bekleidungsisolation [m$^2$ * K/W]
$f_{cl}$... der Bekleidungsflächenfaktor
$t_a$.... die Lufttemperatur [°C]
$t_r$... die mittlere Strahlungstemperatur [°C]
$v_{er}$...die relative Luftgeschwindigkeit [m/s]
$p_a$...der Wasserdampfpartialdruck [Pa]
$h_c$... der konvektive Wärmeübergangskoeffizient [W/(m$^2$ * K]
$t_{cl}$... die Oberflächentempertur der Bekleidung [°C]

Ausgehend von dem vorhergesagten mittleren Votum kann der vorausgesagte Prozentsatz einer unzufriedenen Person bestimmt werden. Nachdem der PMV-Wert ermittelt wurde, kann der Prozentsatz an Personen ermittelt werden, die ein bestimmtes Umgebungsklima als zu warm (PMV = 2 bis 3) oder zu kalt (PMV = -2 bis -3) empfinden werden.

$$= 100 - 95 * e^{(0,03353 \cdot PMV^4 - 0,2179 \cdot PMV^2)}$$

Gemäß einer bevorzugten Ausführungsform der vorliegenden Erfindung wird der Wert der zumindest einen Größe durch Messung mittels zumindest eines geeigneten Sensors innerhalb und/oder außerhalb der Kabine erfasst oder mittels einer Benutzervorgabe festgelegt.
So kann die Lufttemperatur innerhalb oder außerhalb der Kabine leicht durch Temperatursensoren innerhalb bzw. außerhalb der Kabine gemessen werden, was ebenso für die auf das Kabinenpersonal einwirkende thermische Strahlung, die Strömungsgeschwindigkeit der Kabinenluft und die Luftfeuchtigkeit der Kabinenluft durch entsprechend geeignete Sensoren möglich ist. Es ist vorstellbar die stoffwechselbedingte Wärmeerzeugung des Kabinenpersonals durch beispielsweise auf der Haut getragene Temperatursensoren zu bestimmen, oder etwa durch Infrarotkameras, welche ein Wärmebild des Kabinenpersonals erfassen. Die Wärmedämmung der Bekleidung des Kabinenpersonals könnte durch Temperatursensoren auf der Innen- bzw. Außenseite der Kleidung gemessen werden, könnte jedoch ebenfalls manuell durch das Kabinenpersonal eingegeben werden. Beispielsweise könnte das Kabinenpersonal mittels einer Eingabeeinrichtung, beispielsweise einer Tastatur die getragene Kleidung auswählen, woraus das System die Wärmedämmung der Kleidung aus Tabellen bestimmen könnte.
Ferner ist es vorstellbar, die Ist-Temperatur und/oder den Wert der zumindest einen Größe an mehreren voneinander beabstandeten Orten innerhalb und/oder außerhalb der Kabine zu erfassen. Beispielsweise könnte auf diese Weise die Lufttemperatur im Kopf- und zugleich im Fußbereich des Kabinenpersonals erfasst werden, wodurch überprüft werden könnte, ob das Kabinenpersonal die Kabinenluft etwa im Fußbereich als zu kalt oder im Kopfbereich als zu warm empfinden könnte.
Ferner wäre es vorstellbar, die Soll-Temperatur für voneinander beabstandete Orte der Kabine zu bestimmen. Auf diese Weise könnte beispielsweise im Kopfbereich generell eine niedrigere Soll-Temperatur der Kabinenluft vorgesehen werden als im Fußbereich.
Gemäß einer weiteren bevorzugten Ausführungsform wäre es vorstellbar, einen sogenannten "Override"-Modus bereitzustellen, welcher es dem Kabinenpersonal ermöglicht, die Eigenschaft der der Kabine zugeführten Luft, insbesondere den Volumenstroms, die Richtung und/oder die Temperatur an individuelle Wünsche anzupassen. Es ist erfindungsgemäß vorgesehen bei der Regelung der Eigenschaften, insbesondere des Volumenstroms und/oder der Richtung und/oder der Temperatur der der Kabine zugeführten Luft zusätzlich zumindest einen der folgenden Parameter zu berücksichtigen, insbesondere wobei dessen Wert mittels zumindest eines geeigneten Sensors innerhalb und/oder außerhalb der Kabine erfasst oder mittels einer Benutzervorgabe festgelegt wird.

- Beschlagen zumindest einer Kabinenscheibe;
- $CO_2$-Gehalt der Kabinenluft;
- Schadstoffgehalt der Kabinenluft oder Außenluft;
- möglichst schnelle Abkühlung der Luft in der Kabine;
- möglichst schnelle Erwärmung der Luft in der Kabine.

Die vorliegende Erfindung bietet also ebenfalls die Möglichkeit, neben der Sicherstellung der thermischen Behaglichkeit des Kabinenpersonals weitere Erfordernisse zu erfüllen und die Eigenschaften der der Kabine zugeführten Luft entsprechend zu regeln.

Gemäß der Erfindung ist vorgesehen, zumindest einem dieser Parameter bei der Regelung der Eigenschaften, insbesondere des Volumenstroms, der Richtung und/oder der Temperatur der zugeführten Luft eine Vorrangigkeit oder Nachrangigkeit gegenüber der thermischen Behaglichkeit festzulegen. Mit anderen Worten kann beispielsweise bei einem erhöhten $CO_2$-Gehalt der Kabinenluft der der Kabine zugeführte Luft-Volumenstrom erhöht werden, obwohl dies abträglich für die thermische Behaglichkeit des Kabinenpersonals wäre.

Erfindungsgemäß werden dem Kabinenpersonal auf einer Anzeige Hinweise zum Erreichen eines Soll-Zustands angezeigt. Der Soll-Zustand bezieht sich hierbei nicht nur auf die Soll-Temperatur der Kabinenluft sondern kann ebenfalls die oben genannten Parameter, nämlich das Beschlagen zumindest einer Kabinenscheibe (gemessen beispielsweise über einen Feuchtigkeitssensor an einer Scheibe), den $CO_2$-Gehalt der Kabinenluft, den Schadstoffgehalt der Kabinenluft oder die möglichst schnelle Abkühlung/Erwärmung der Luft in der Kabine betreffen. Beispielsweise könnte zum möglichst schnellen Abkühlung bzw. Erwärmen der Kabinenluft der Hinweis gegeben, die Kabinenfenster zu schließen oder bei einem zu hohen Schadstoffgehalt der Kabinenluft oder Außenluft der Hinweis, die Kabinenfenster zu öffnen bzw. zu schließen.

Auch wäre es vorstellbar, für bestimmte Personen des Kabinenpersonals individuelle Werte für die Eigenschaften von insbesondere dem Volumenstrom, die Richtung und/oder die Temperatur der der Kabine zugeführten Luft für einen späteren Abruf zu speichern. Somit wäre es möglich, verschiedenen Kranführern ein angenehmes Klima in der Führerkabine bereitzustellen, ohne dass diese einzelne Größen, beispielsweise die Wärmedämmung der von ihnen gerade getragenen Kleidung manuell eingeben zu müssen. So wäre es denkbar, dass jeder Kranführer mittels Tastendruck dem System mitteilt, die Eigenschaften der der Kabine zugeführten Luft an seine Person anzupassen.

Ein weiterer Aspekt der vorliegenden Erfindung betrifft eine Klimaregelungsvorrichtung für die Kabine einer Baumaschine, insbesondere eines Krans, die dazu ausgestaltet ist, ein Verfahren, wie es oben beschrieben ist auszuführen.

Eine solche Klimaregelungsvorrichtung umfasst zumindest eine Belüftungseinrichtung, um der Kabine Luft zuzuführen und zumindest einen Sensor zum Messen oder eine Eingabeschnittstelle zum manuellen Eingeben von die thermische Behaglichkeit des Kabinenpersonals beeinflussenden Größen. Die erfindungsgemäße Klimaregelungsvorrichtung kann ferner eine Heizung und/oder eine Klimaanlage aufweisen, um die Temperatur und die Luftfeuchtigkeit der der Kabine zugeführten Luft zu regeln.

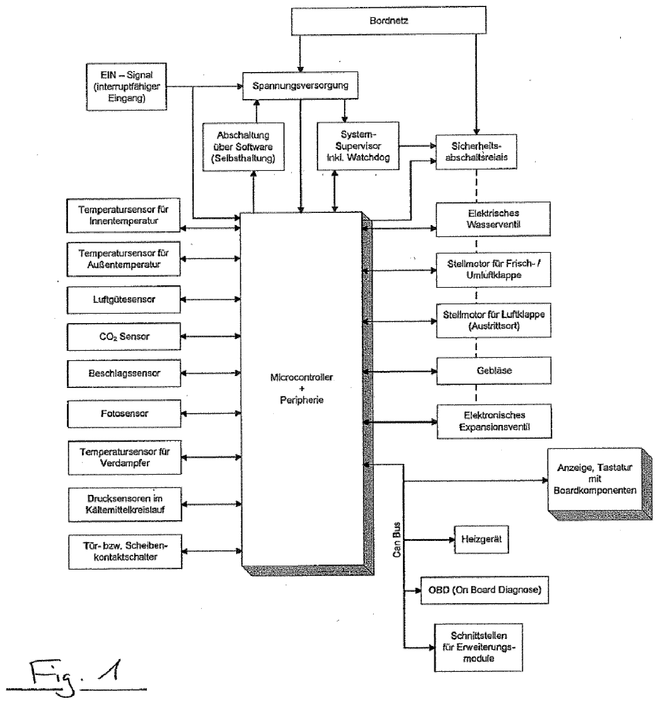

Eine besonders bevorzugte Ausführungsform einer erfindungsgemäßen Klimaregelungsvorrichtung ist in der beiliegenden Figur 1 zu sehen. Die vorliegende Erfindung kann alle hierin gezeigten Merkmale einzeln sowie in jedweder sinnvollen Kombination aufweisen.

Die Regelungsvorrichtung umfasst einen Mikrocontroller, der mit geeigneten Sensoren, beispielsweise den oben beschriebenen Sensoren verbunden ist und deren Messwerte aufnimmt. Andererseits ist der Mikrocontroller mit dem Gebläse, der Klimaanlage und der Heizung einer Luftzuführeinrichtung verbunden und steuert bzw. regelt diese auf Basis der von den Sensoren gelieferten Messwerten. Mittels eines CAN-Busses wird dem Kabinenpersonal die Möglichkeit gegeben, Eingaben mittels einer Tastatur zu tätigen, wobei ferner eine Anzeigemöglichkeit, beispielsweise über ein Display gegeben ist.

## Patentansprüche

1. Verfahren zur Regelung des Klimas in einer Führerkabine einer Baumaschine, insbesondere eines Krans, wobei die Ist-Temperatur der Luft in der Kabine mittels zumindest eines Sensors erfasst wird, und Eigenschaften, insbesondere der Volumenstrom, die Richtung und/oder die Temperatur der der Kabine zugeführten Luft auf Basis der erfassten Ist-Temperatur und einer bestimmten Soll-Temperatur automatisch geregelt wird, wobei die Soll-Temperatur auf Basis von zumindest einer Größe automatisch bestimmt wird, die Einfluss auf die thermische Behaglichkeit des Kabinenpersonals hat, und wobei bei der Regelung der Eigenschaften, insbesondere des Volumenstroms, der Richtung und/oder der Temperatur der der Kabine zugeführten Luft zusätzlich zumindest einer der folgenden Parameter berücksichtigt wird, insbesondere wobei deren Wert mittels zumindest eines Sensors innerhalb und/oder außerhalb der Kabine erfasst oder mittels einer Benutzervorgabe festgelegt wird:

- Beschlagen zumindest einer Kabinenscheibe;
- $CO_2$-Gehalt der Kabinenluft;
- Schadstoffgehalt der Kabinenluft oder Außenluft;
- möglichst schnelle Abkühlung der Luft in der Kabine;
- möglichst schnelle Erwärmung der Luft in der Kabine;

wobei für zumindest einen dieser Parameter bei der Regelung der Eigenschaften, insbesondere des Volumenstroms, der Richtung und/oder der Temperatur der zugeführten Luft eine Vorrangigkeit oder Nachrangigkeit gegenüber der Soll-Temperatur festgelegt wird,
**dadurch gekennzeichnet, dass**
dem Kabinenpersonal auf einem Display Hinweise darüber angezeigt werden, wie die Soll-Temperatur oder der Soll-Zustand eines der Parameter möglichst schnell erreicht werden kann.

2. Verfahren gemäß Anspruch 1, wobei zumindest eine der folgenden Größen bei der Bestimmung der Soll-Temperatur berücksichtigt wird:

- die Lufttemperatur außerhalb der Kabine;
- die auf das Kabinenpersonal einwirkende thermische Strahlung;
- die Strömungsgeschwindigkeit der Kabinenluft;
- die Luftfeuchtigkeit der Kabinenluft;
- die stoffwechselbedingte Wärmeerzeugung des Kabinenpersonals; und/oder
- die Wärmedämmung der Kleidung des Kabinenpersonals.

3. Verfahren gemäß Anspruch 1 oder 2, wobei der Wert der zumindest einen Größe durch Messung mittels zumindest eines Sensors innerhalb und/oder außerhalb der Kabine erfasst oder mittels einer Benutzervorgabe festgelegt wird.

4. Verfahren gemäß einem der Ansprüche 1 bis 3, wobei die Ist-Temperatur und/oder der Wert der zumindest einen Größe an mehreren voneinander beabstandeten Orten innerhalb und/oder außerhalb der Kabine erfasst wird.

5. Verfahren gemäß einem der Ansprüche 1 bis 4, wobei die Soll-Temperatur für voneinander beabstandete Orte der Kabine bestimmt wird.

6. Verfahren nach einem der Ansprüche 1 bis 5, wobei eine Möglichkeit bereitgestellt wird, individuell eingestellte Werte für die Eigenschaften, insbesondere den Volumenstrom, die Richtung und/oder die Temperatur der der Kabine zugeführten Luft für einen späteren Abruf zu speichern.

7. Klimaregelungsvorrichtung für die Kabine einer Baumaschine, insbesondere eines Krans, die dazu ausgestaltet ist, ein Verfahren gemäß einem der vorhergehenden Ansprüche auszuführen.

**Claims**

1. A method for climate control in an operator's cabin of a construction machine, in particular a crane, wherein the actual temperature of the air in the cabin is detected by means of at least one sensor, and characteristics - in particular the volume flow, direction and/or temperature - of the air supplied to the cabin are automatically controlled on the basis of the detected actual temperature and a particular target temperature, wherein the target temperature is automatically determined on the basis of at least one variable which affects the thermal comfort of the cabin personnel, and wherein at least one of the following parameters is additionally taken into account when controlling the characteristics, in particular the volume flow, direction and/or temperature, of the air supplied to the cabin, in particular wherein values for it/them are detected by means of at least one sensor inside and/or outside the cabin or are predefined by the user:

- at least one cabin pane misting up;
- the $CO_2$ content in the cabin air;
- the content of pollutants in the cabin air or outside air;
- cooling the air in the cabin as quickly as possible;
- heating the air in the cabin as quickly as possible;

wherein at least one of these parameters is ranked higher or lower than the target temperature when controlling the characteristics, in particular the volume flow, direction and/or temperature, of the air supplied,
**characterised in that**
instructions for how the target temperature or target state of one of the parameters can be achieved as quickly as possible are indicated to the cabin personnel on a display.

2. The method in accordance with Claim 1, wherein at least one of the following variables is taken into account when determining the target temperature:

- the air temperature outside the cabin;
- the thermal radiation to which the cabin personnel is exposed;
- the flow velocity of the cabin air;
- the humidity of the cabin air;
- the metabolic heat production of the cabin personnel;
and/or
- the heat insulation of the cabin personnel's clothing.

3. The method in accordance with Claim 1 or 2, wherein the value of the at least one variable is measured by means of at least one sensor inside and/or outside the cabin or is predefined by the user.

4. The method in accordance with any one of Claims 1 to 3, wherein the actual temperature and/or the value of the at least one variable is detected at a number of mutually spaced locations inside and/or outside the cabin.

5. The method in accordance with any one of Claims 1 to 4, wherein the target temperature is determined for mutually spaced cabin locations.

6. The method in accordance with any one of Claims 1 to 5, wherein an option is provided of storing individually set values for the characteristics, in particular the volume flow, direction and/or temperature, of the air supplied to the cabin, in order to be subsequently retrieved.

7. A climate control device for the cabin of a construction machine, in particular a crane, which is configured to perform a method in accordance with any one of the preceding claims.

**Revendications**

1. Procédé de régulation de l'atmosphère dans une cabine d'opérateur d'un engin de chantier, notamment d'une grue, où la température réelle de l'air dans la cabine est détectée au moyen d'au moins un capteur, et des propriétés, notamment le débit, la direction et/ou la température de l'air amené à la cabine sont réglées automatiquement sur la base de la température réelle détectée et d'une température souhaitée déterminée, où la température souhaitée est déterminée automatiquement sur la base d'au moins une grandeur qui a une influence sur le confort thermique du personnel de la cabine, et où, lors de la régulation des propriétés, notamment du débit, de l'orientation et/ou de la température de l'air amené dans la cabine, on tient en outre compte d'au moins un des paramètres suivants, notamment où leur valeur est fixée au moyen d'au moins un capteur à l'intérieur et/ou à l'extérieur de la cabine ou au moyen d'une consigne d'utilisateur :

- l'exposition d'au moins une vitre de cabine ;
- la teneur en $CO_2$ de l'air de la cabine ;
- la teneur en matières nocives de l'air de la cabine ou de l'air extérieur ;
- si possible, un refroidissement rapide de l'air dans la cabine ;
- si possible, un réchauffement de l'air dans la cabine ;

où, pour au moins un de ces paramètres, lors de la régulation des propriétés, notamment du débit, de la direction et/ou de la température de l'air amené, on constate une priorité ou une subordination vis-à-vis de la température souhaitée,

**caractérisé en ce que**

des informations sont indiquées au personnel de cabine sur un affichage en ce qui concerne la manière par laquelle la température souhaitée ou l'état souhaité de l'un des paramètres peut être atteint si possible rapidement.

2. Procédé selon la revendication 1, dans lequel on tient compte d'au moins une des grandeurs suivantes lors de la détermination de la température souhaitée :

   - la température de l'air à l'extérieur de la cabine ;
   - le rayonnement thermique agissant sur le personnel de cabine ;
   - la vitesse de passage de l'air de la cabine ;
   - l'humidité de l'air de l'air de la cabine ;
   - la génération de chaleur due au métabolisme du personnel de cabine ; et/ou
   - l'isolation thermique des vêtements du personnel de cabine.

3. Procédé selon la revendication 1 ou la revendication 2, dans lequel la valeur de l'au moins une grandeur est détectée par la mesure au moyen d'au moins un capteur à l'intérieur et/ou à l'extérieur de la cabine ou est fixée au moyen d'une consigne d'utilisateur.

4. Procédé selon l'une des revendications 1 à 3, dans lequel la température réelle et/ou la valeur d'e l'au moins une grandeur sont détectées à plusieurs endroits espacés les uns des autres à l'intérieur et/ou à l'extérieur de la cabine.

5. Procédé selon l'une des revendications 1 à 4, dans lequel la température souhaitée est déterminée pour des endroits de la cabine espacés les uns des autres.

6. Procédé selon l'une des revendications 1 à 5, dans lequel il existe une possibilité de stocker les valeurs réglées individuellement pour les propriétés, notamment le débit, la direction et/ou la température de l'air amené dans la cabine pour une utilisation ultérieure.

7. Dispositif de régulation d'atmosphère pour la cabine d'un engin de chantier, notamment d'une grue, qui est conçu pour exécuter un procédé selon l'une des revendications précédentes.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3424366 A1